Europäisches Patentamt

**European Patent Office**

**Office européen des brevets**

(11) Publication number: **0 007 177**

**A1**

(12) **EUROPEAN PATENT APPLICATION**

(21) Application number: **79301106.5**

(22) Date of filing: **12.06.79**

(51) Int. Cl.³: **E 06 B 3/72**
**E 05 D 5/02, B 60 J 5/04**
**B 60 P 3/32**

(30) Priority: **16.06.78 GB 2713678**

(43) Date of publication of application:
**23.01.80 Bulletin 80/2**

(84) Designated Contracting States:
**DE FR GB**

(71) Applicant: **PERCY LANE GROUP LIMITED**
**79, Colmore Row**
**Birmingham B3 2AP(GB)**

(72) Inventor: **Cartwright, Alan Joseph Robert**
**44 Wordsworth Road**
**Harpenden Hertfordshire(GB)**

(72) Inventor: **Overfield, Thomas Donald**
**Trouts Rise 41 Wharton Avenue**
**Solihull West Midlands(GB)**

(72) Inventor: **Newman, Anthony**
**30 Gillway Lane**
**Tamworth Staffs(GB)**

(74) Representative: **Lewis, Samuel Hewitt et al,**
**Forrester & Boehmert Widenmayerstrasse 5/IV**
**D-8000 München 22(DE)**

(54) **Caravan door, hinge member therefor, method of assembling of said door and caravan comprising a door surround.**

(57) The invention is concerned with a caravan door of the kind comprising a frame, constituted by a peripheral frame member (6) and front and rear facing panels (10,11) enclosing an interior cavity. Hinge members (16) are mounted on the frame member (6) with portions (18) thereof extending through slots (14) in the frame member into the interior cavity (13). Connected to and extending between said portions (18) is a cross member (20). The hinge members (16) are urged into tight abutting engagement with the frame member (6) by bracing means in the form of spacer members (24) acting between the interior of the framework (6) and the cross member (20). Inter-engagement between foam material filling the cavity (13) with the portions (18) and the cross member (20) restrains movement of the hinge members relative to the door as a whole, whereby the longitudinal axis of the hinge members (16) are retained in a desired alignment.

Advantageously the caravan comprises a door surround providing the opening, which provides one or more lip portions (54) which are inclined to the plane of the opening (4) in a manner such as to present a sloping surface to the door on closing movement thereof.

Fig. 1

Croydon Printing Company Ltd

Title:   "Improvements relating to doors"

Description of Invention

This invention concerns improvements relating to doors, and in particular to caravan doors.

In the manufacture of caravans, it is desirable practice to provide a surround bounding a door opening which is afforded with hinge parts, upon which a prefrabricated door comprising complimentary hinge members is hung.  This requires the door to have been prefabricated with the hinge members in accurate, predetermined positions.

The difficulty of providing a caravan door with accurately located hinge members is compounded where the door is of the kind (hereinafter referred to as being of the kind specified) comprising a frame which bounds an interior cavity filled with for example cellular plastics material.

According to this invention there is provided a caravan door of the kind specified, comprising a frame member, through which two slots extend in spaced relationship to one another along one side thereof, and two hinge members located against the frame member one adjacent to each of the slots, each hinge member comprising a part, or having secured thereto a separate part, which extends through the slot into the interior cavity of the door, material in said cavity restraining movement of said parts in the cavity, and hence movement of the hinge members relative to the frame member.

Preferably, where the frame comprises spaced front and rear facing panels, each of said parts extends into the interior cavity between said front and rear facing panels, for example transversely of the said side of the frame member and away from the hinge member with which it is associated, and may be apertured with the material in the cavity, conveniently foam material, extending through the apertures.

Said parts may act in conjunction with the foam material as the primary means of prevention of movement of the hinge members relative to the frame member; alternatively or in addition a further member connected to and extending between the said parts may act on conjunction with the foam material as a means of restrain to movement of the hinge members relative to the frame member.

Preferably bracing means is utilised, operative at least initially to hold the hinge members in a tightly abutting relationship with the frame member. Such bracing means may be operative between the frame member and the said parts, or (if present) between the frame member and the further member.

This invention also provides a method of assembly of a caravan door of the kind specified, in which:

(a)     part of a framework is assembled, comprising at least one peripheral frame member and a facing panel secured to the frame member, said frame member being afforded with two slots extending in spaced relation along one side of the framework;

(b)     two hinge members, each comprising or having a part secured thereto, are presented to the frame member from the outer side thereof and the part of each is inserted through one of the slots;

(c) a cross member is connected to, extending between the two parts on the inner side of the frame member;

(d) bracing means is positioned between the cross member and the inner side of the frame member to pull the hinge members into close abutment with the outer side of the frame member;

(e) the second facing panel is secured to the frame member in spaced relation with the first said facing panel, affording in conjunction therewith and with the frame member a cavity within which said parts of the hinge members, the cross member and the bracing means extend;

(f) hinge members of the door are mounted on a jig which retain the hinge members in a desired axial orientation relative to the door;

(g) a curable plastics material is injected into the cavity.

The invention may be used with advantage both in caravan doors of unitary construction, or in caravan doors of the "stable door" construction.

This invention also provides a caravan comprising a door surround providing an opening, corner portions of which are concave-curved, and a door mounted for movement relative to the opening between open and closed positions, the door being provided with convex-curved corner portions, wherein the door surround provides one or more lip portions inclined to the plane of the opening in a manner such as to present a sloping surface to the door on closing movement thereof.

Preferably there is one such lip portion which is continuous around the interior of the surround, and which presents a continuous sloping surface to the door. Advantageously the sloping surface is concave-curved in planes extending at right angles to the plane of the opening.

Advantageously a continuous resilient seal is provided which is resiliently compressed between the door and the said sloping surface on closing of the door.

There will now be given a detailed description, to be read with reference to the accompanying drawings, of a caravan door which is a preferred embodiment of this invention, and which has been selected to illustrate the invention by way of example.

In the drawings:-

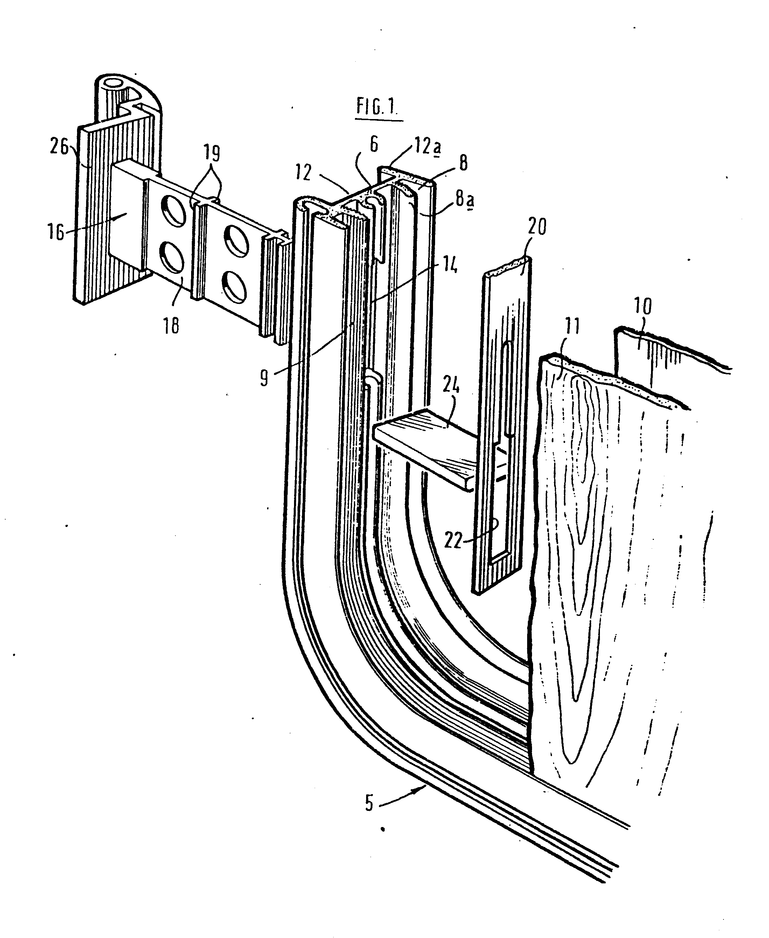

FIGURE 1 is an exploded perspective view of one corner of the caravan door;

FIGURE 2 is a side elevation of one side of the door, and

FIGURE 3 is a sectional view corresponding generally to a section taken on the line A-A of Figure 2, but showing the door position in relation to an associated door opening.

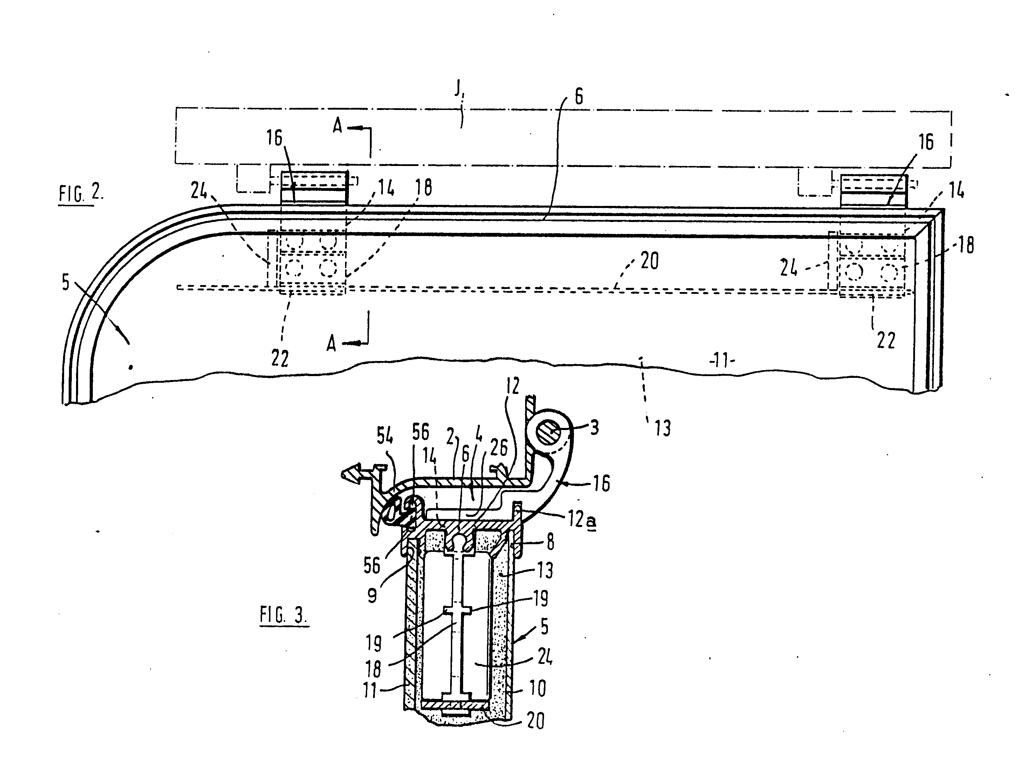

The caravan door which is the preferred embodiment of this invention is adapted to be mounted in relation to a door opening 4 (Figure 3) defined by a peripheral frame or surround 2. The door, being a door of the kind specified, comprises a frame which bounds an interior cavity 13, said frame comprising a peripheral frame member 6 in the form of an extrusion of aluminium or aluminium alloy of channel cross section. The member 6 is provided with internal peripheral slots 8,9 within respective ones of which front and rear facing panels 10,11 of the frame may be mounted, and an exterior channel 12. One of the ribs 8a, defining the slot 8, is inclined slightly, extending generally into the interior cavity 13 between the facing panels 10 and 11.

At two spaced positions on one side of the frame member 6 through extending slots 14,14 are provided, and located in each is a hinge member 16. Each hinge member 16 comprises, on the interior of the frame member, an apertured web 18, and extending between the two apertured webs 18 is a cross member 20, secured thereto by a key-hole arrangment 22.

Braced between end portions of the cross member 20 and an internal part of the frame member 6 are two spacer members 24. These serve resiliently to pull the webs 18 into the cavity 13, and to pull a flange 26 of each of the hinge members into tight abutment with the frame member within the channel 12, and a lip 12a, defining one side of the channel 12 into a complimentary slot provided in the hinge member.

Within the cavity 13 between the facing panels 10,11 including the space between the cross member 20 and the frame member 6, and extending through the apertures of the webs 18 is a body of rigid foam material. This serves not only as an infill material for the cavity of the door, but also serves to restrain movement of the cross member 20 and the webs 18, and hence the hinge members, relative to the frame member.

Thus, location of the flanges 26 within the channel 22 serves to prevent twisting movement of the hinge members, and the action of the foam material within the cavity of the door prevents orthogonal separative movement between the hinge member and the frame, and also prevents tilting separative movement between hinge members and frame.

In the preferred embodiment, each web 18 is integral with its associated hinge member. However, if desired, the webs may be formed initially separately from the hinge members, and may be welded, brazed or otherwise connected to the hinge member subsequently. Thus, webs larger than those illustrated in the accompanying drawings may be used, each being secured to a part of an associated hinge member subsequent to the insertion of such part to one of the slots 14. Thus, and particularly where the webs are provided with transverse ribs 19 (as shown in the drawings), in certain constructions the cross member 20 may be dispensed with.

Additionally, in the preferred embodiment, bracing means in the form of spacer members 24 is used. However, it may be possible to pull the webs 18 into the interior of the cavity, and hence the hinge members into tight abutment with the frame member within the channel 12, by the use of tension wires.

In the assembly of the caravan door which is the preferred embodiment of this invention, one of the facing panels 10 or 11 is located within its associated internal slot 8 or 9 of the peripheral frame member 6, and the webs 18 of the two hinge members are each inserted through one of the two through-extending slots 14. The cross member 20 is then connected to said two webs by the key-hole arrangement 22.

The two spacer members are then inserted between that side of the frame member which is provided with the slots 14, and the cross member 20, pulling the webs 18 firmly into the interior of the door, and the hinge members 6 into close abutment within the exterior channel 12 of the frame member 6. The other facing panel is then inserted into its respective peripheral slot.

The hinge members of the door are then mounted on the pins of a Jig J (shown in Figure 2) to ensure that axial alignment of the hinge members 16 is retained whilst foam plastics material is injected into the interior cavity of the door, as defined by the front and rear facing panels and the peripheral frame member.

During such injection, air which is displaced from the interior cavity of the door is expelled through the small gaps which exist between the hinge members and their respective slots 14, such gaps however being insuffiently large to permit the escape of any significant quantity of the foam material itself. On completion of curing the foam material, the hinge members 16 are restrained against movement relative to the door from desired axial orientations by virtue of the inter-engagement of the foam plastics material with the webs 18 of the hinge members, and with the cross member 20. Thus, the door may be removed from the jig, and mounted on hinge pins 3 afforded by the peripheral surround 2, without difficulty.

The door which is the preferred embodiment of this invention is a one piece door having two convex-curved corner portions. The door surround is provided with a continuous lip portion 54 which is inclined to the plane of the opening in a manner such as to present a sloping surface to the door on closing movement thereof, and in particular a sloping surface which is concave-curved in planes extending at right angles to the plane of the opening (See Figure 3). Secured in a slot 55 extending around an interior. peripheral corner of the frame member 6 is a resilient sealing gasket 56, which on closing movement of the door is trapped against the lip portion 54, to ensure a tight seal between the door and the peripheral surround 2. By the use of this expedient, a tight seal may be so obtained with a somewhat less strict requirement of accuracy in both alignment of the door within the opening, and in the size of the door relative to the opening. In particular, even though the door may be mounted relative to the opening slightly ascew, the capability of the resilient seal 54 to be deformed allows a tight seal to be obtained.

In a two piece "stable door", all four corners thereof may be of convex-curved form.

In the preferred embodiment, not only the webs 18, but preferably also the cross-member 20 and the spacer members 24 are provided with perforations, foam plastics material entering these perforations and assisting restraining of the hinge members from their correct positions.

## CLAIMS

1. A caravan door of the kind specified, comprising a frame member through which two slots extend in spaced relationship to one another along one side thereof, and two hinge members located against the frame member one adjacent to each of the slots, each hinge member comprising a part, or having secured thereto a separate part, which extends through the slot into the interior cavity of the door, material in the cavity restraining movement of said parts in the cavity, and hence movement of the hinge members relative to the frame member.

2. A caravan door according to Claim 1 wherein the frame comprises spaced front and rear facing panels and each of said parts extends into the interior cavity between said facing panels.

3. A caravan door according to Claim 2 wherein each of said parts extends transversely of said side of the frame member away from the hinge member with which it is associated.

4. A caravan door according to any one of the preceding claims wherein each of said parts is apertured with material in the cavity extending through the apertures.

5. A caravan door according to any one of the preceding claims comprising a further member in said interior cavity which is connected to and extends between said parts, said further member acting in conjunction with the material in the cavity to restrain movement of the hinge members relative to the frame member.

6. A caravan door according to any one of the preceding claims comprising bracing means operative at least initially to hold the hinge members in tightly abutting relationship with the frame member.

7. A caravan door according to Claim 6 wherein said bracing means is operative between the frame member and said parts.

8. A hinge member according to Claim 6, as appendant to claim 5, wherein said bracing means is operative between the frame member and said further member.

9. A method of assembly of a caravan door of the kind specified, in which:-

(a) part of a framework is assembled, comprising at lest one peripheral frame member and a facing panel secured to the frame member, said frame member being afforded with two slots extending in spaced relation along one side of the framework;

(b) two hinge members, each comprising or having a part secured thereto, are presented to the frame member from the outer side thereof and the part of each is inserted through one of the slots;

(c) a cross member is connected to, extending between the two parts on the inner side of the frame member;

(d) bracing means is positioned between the cross member and the inner side of the frame member to pull the hinge members into close abutment with the outer side of the frame member;

(e) the second facing panel is secured to the frame member in spaced relation with the first said facing panel, affording in conjunction therewith and with the frame member a cavity within which said parts of the hinge members, the cross member and the bracing means extend;

(f)     hinge members of the door are mounted on a jig which retain the hinge members in a desired axial orientation relative to the door;

(g)     a curable plastics material is injected into the cavity.

10.     A caravan comprising a door surround providing an opening, corner portions of which are concave-curved, and a door mounted for movement relative to the opening between open and closed positions, the door being provided with convex-curved corner portions, wherein the door surround provides one or more lip portions inclined to the plane of the opening in a manner such as to present a sloping surface to the door on closing movement thereof.

11.     A caravan according to Claim 10 wherein there is one such lip portion which is continuous around the interior of the surround, and which presents a continuous sloping surface to the door.

12.     A caravan according to Claim 11 wherein the sloping surface is concave-curved in planes extending at right angles to the plane of the opening.

13.     A caravan according to any one of claims 10, 11 and 12 comprising a continuous resilient seal which is resiliently compressed between the door and said sloping surface on closing of the door.

13.     A caravan door, constructed and arranged substantially as hereinbefore described with reference to the accompanying drawings.

11.    A method of assembly of a caravan door, when carried out substantially as hereinbefore described with reference to the accompanying drawings.

FIG.1

FIG. 2.

FIG. 3.

## EUROPEAN SEARCH REPORT

### DOCUMENTS CONSIDERED TO BE RELEVANT

| Category | Citation of document with indication, where appropriate, of relevant passages | Relevant to claim |
|---|---|---|
| | DE - B - 1 109 047 (KIEKERT) <br> * Column 1, lines 15-52; column 2, lines 22-52; column 3, lines 1-22; column 4, lines 1-2; figures 1 to 4 * . <br><br> -- <br><br> FR - A - 2 071 245 (CARTOUX) <br> * Page 1, lines 34-40; page 2, lines 1-15; figures 1-4 * <br><br> -- <br><br> US - A - 2 033 884 (DAVISON) <br> * Page 1, column 1, lines 48-55; column 2, lines 1-34 and 47-55; figures 1 to 7 * <br><br> -- <br><br> AT - B - 302 844 (BLUM) <br> * Page 3, lines 30-49; figures 1 and 2 * <br><br> -- <br><br> FR - A - 2 024 451 (PERRY BROTHERS) <br> * Page 1, lines 19-25 and 33-37; page 2, lines 1-2; page 4, lines 9-27; figures 4 to 7 * <br><br> -- <br><br> FR - A - 2 316 427 (ITRES) <br> * Page 1, lines 18-30; page 2, lines 10-20; figures 1 to 4 * <br><br> -- <br><br> A    US - A - 2 924 861 (VIETS) <br> ./. | 1,2,3 <br><br><br><br><br><br><br> 1,2,3, 5 <br><br><br><br><br> 1,4 <br><br><br><br><br><br> 6,7 <br><br><br><br><br> 10,11 13 <br><br><br><br><br><br> 10-13 <br><br><br><br><br> 1,4,9 |

**CLASSIFICATION OF THE APPLICATION (Int. Cl.³)**

E 06 B   3/72
E 05 D   5/02
B 60 J   5/04
B 60 P   3/32

**TECHNICAL FIELDS SEARCHED (Int.Cl.³)**

E 06 B
E 05 D
B 60 J
B 60 P

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |

| Place of search | Date of completion of the search | Examiner |
|---|---|---|
| The Hague | 21-09-1979 | DEPOORTER |

EPO Form 1503.1  06.78

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | * Column 2, lines 66-72; column 3, lines 1-73; column 4, lines 37-60; figures 1 to 11 * <br><br> -- | | |
| A | GB - A - 916 955 (RANNILA) <br> * Page 1, lines 78-82; page 2, lines 1-40; figure * <br><br> -- | 5 | |
| A | US - A - 3 334 464 (CHARLES) <br> * Column 3, lines 33-75; column 4, lines 1-44; figures 1 to 3 * <br><br> ---- | 9 | TECHNICAL FIELDS SEARCHED (Int. Cl.²) |

EPO Form 1503.2   06.78